# EUROPÄISCHE PATENTANMELDUNG

(11) **EP 3 805 549 A1**
(43) Veröffentlichungstag der Anmeldung: **14.04.2021**
(21) Anmeldenummer: 20198331.9
(22) Anmeldetag: 25.09.2020
(51) Int. Cl.: F02M 61/16, F02M 61/18

(54) **EINSPRITZVENTIL**

(30) Priorität: 11.10.2019 DE 102019215643
(71) Anmelder: Robert Bosch GmbH, 70442 Stuttgart (DE)
(72) Erfinder: Herr, Johann, 71665 Vaihingen (DE); Schaefer, Michael, 71636 Ludwigsburg (DE); Jeannel, Laurent, 71254 Ditzingen (DE); Starkert, Tilo, 73272 Neidlingen (DE)

(57) **Zusammenfassung**

Für ein Einspritzventil für Einspritzanlagen von Brennkraftmaschinen, insbesondere für Wassereinspritzanlagen von Brennkraftmaschinen, mit einer Ventillängsachse (10), mit einem Ventilschließkörper (18), der Teil eines axial entlang der Ventillängsachse (10) bewegbaren Ventilgliedes (15) ist und der mit einem an einem Ventilsitzkörper (16) vorgesehenen Ventilsitz (25) zusammenwirkt, mit einer dünnwandigen, sich axial erstreckenden Ventilhülse (6), in der sich das Ventilglied (15) axial bewegt, wird vorgeschlagen, dass der Ventilsitz (25) aus dem Material X4CrNiMo16-5-1 (1.4418) ausgebildet ist.

## Beschreibung

### Stand der Technik

Die Erfindung geht aus von einem Einspritzventil nach der Gattung des Hauptanspruchs, einer Verwendung des Einspritzventils und einer Wassereinspritzvorrichtung mit einem erfindungsgemäßen Wassereinspritzventil.

Aufgrund steigender Anforderungen an reduzierte Kohlenstoffdioxidemissionen werden Brennkraftmaschinen zunehmend hinsichtlich des Kraftstoffverbrauchs optimiert. Allerdings können bekannte Brennkraftmaschinen in Betriebspunkten mit hoher Last nicht optimal im Hinblick auf den Verbrauch betrieben werden, da der Betrieb durch Klopfneigung und hohe Abgastemperaturen begrenzt ist. Eine mögliche Maßnahme zur Reduzierung der Klopfneigung und zur Senkung der Abgastemperaturen ist die Einspritzung von Wasser. Hierbei sind üblicherweise separate Wassereinspritzsysteme vorgesehen, um die Wassereinspritzung zu ermöglichen. So ist beispielsweise aus der DE 10 2015 208 476 A1 ein Wassereinspritzsystem für eine Brennkraftmaschine bekannt.

Brennkraftmaschinen mit Wassereinspritzsystemen sind aus dem Stand der Technik in unterschiedlichen Ausgestaltungen bekannt. Es sind Wassereinspritzsysteme bekannt, bei denen Wasser in ein Saugrohr der Brennkraftmaschine eingespritzt wird. Weiterhin sind Wassereinspritzsysteme bekannt, bei denen das Wasser Kraftstoff zugemengt wird und dann zusammen mit dem Kraftstoff als Emulsion direkt in den Brennraum der Brennkraftmaschine eingespritzt wird.

Bei der Verwendung von Wasser oder wasserhaltigen Medien in einem Wassereinspritzsystem müssen die einzelnen Komponenten des Wassereinspritzsystems vor korrosivem Angriff durch das Wasser geschützt werden. Dabei muss insbesondere dem korrosiven Angriff von Wasser in den Einspritzventilen, durch die Wasser oder ein wasserhaltiges Medium eingespritzt wird, entgegengewirkt werden.

### Offenbarung der Erfindung

Erfindungsgemäß wird Einspritzventil für Einspritzanlagen von Brennkraftmaschinen, insbesondere für Wassereinspritzanlagen von Brennkraftmaschinen vorgeschlagen. Weiterhin wird eine Verwendung dieses Einspritzventils und eine Wassereinspritzvorrichtung umfassend dieses Einspritzventil vorgeschlagen. Das Einspritzventil hat eine Ventillängsachse, einen Ventilschließkörper, der Teil eines axial entlang der Ventillängsachse bewegbaren Ventilgliedes ist und der mit einem an einem Ventilsitzkörper vorgesehenen Ventilsitz zusammenwirkt. Weiterhin umfasst das Einspritzventil eine dünnwandige, sich axial erstreckende Ventilhülse, in der sich das Ventilglied axial bewegt. Erfindungsgemäß ist der Ventilsitz aus dem Material X4CrNiMo16-5-1 (1.4418) ausgebildet.

### Vorteile der Erfindung

Das erfindungsgemäße Einspritzventil mit den kennzeichnenden Merkmalen des Hauptanspruchs hat den Vorteil, dass das Einspritzventil für die Einspritzung von Wasser oder Wasserlösungen geeignet ist und dem korrosiven Angriff von Wasser auf den Ventilsitz standhalten kann. So können Einspritzventile aus anderen Bereichen, in denen die Korrosion durch das durch das einzuspritzende Medium keine Rolle spielt, wie beispielsweise der Kraftstoffeinspritzung, verwendet werden. Dabei wird das Material des Ventilsitzes des herkömmlichen Kraftstoffeinspritzventils durch das relativ weiche Material X4CrNiMo16-5-1 (1.4418) ersetzt. Der sonst bei herkömmlichen Einspritzventilen auftretenden Korrosion durch Wasser wird durch die Wahl des Materials des Ventilsitzes entgegengewirkt. So kann das Einspritzventil zum Einspritzen von Wasser und wasserhaltigen Medien genutzt werden und zeichnet sich trotzdem durch hohe Zuverlässigkeit und hohe Lebensdauer aus.

Durch die in den Unteransprüchen aufgeführten Maßnahmen sind vorteilhafte Weiterbildungen und Verbesserungen des im Hauptanspruch angegebenen Einspritzventils möglich.

Gemäß einem vorteilhaften Ausführungsbeispiel ist vorgesehen, dass das Ventilglied den Ventilschließkörper, eine Nadelhülse und einen Magnetanker umfasst, wobei der Ventilschließkörper an einem stromabwärtigen, dem Ventilsitzkörper zugewandten Ende der Nadelhülse angeordnet ist und der Magnetanker an dem stromaufwärtigen Ende der Nadelhülse angeordnet ist.

Gemäß einem vorteilhaften Ausführungsbeispiel ist vorgesehen, dass der Ventilschließkörper mittels einer ersten Schweißnaht an die Nadelhülse geschweißt ist. So kann der Ventilschließkörper besonders sicher und einfach an der Nadelhülse befestigt sein.

Gemäß einem vorteilhaften Ausführungsbeispiel ist vorgesehen, dass der Ventilschließkörper aus dem Material X5CrNiMo17-12-2 (1.4401) ausgebildet ist. Ein derart beschaffener Ventilschließkörper zeichnet sich durch im Vergleich zu herkömmlichen Ventilkörpern (beispielsweise aus X105CrMo17 (1.4125) erniedrigten Kohlenstoffanteil-Anteil aus. Der Ventilschließkörper ist so vorteilhaft gut an das Material des Ventilsitzes angepasst und für die Verwendung des Einspritzventils zur Eispritzung von Wasser oder wasserhaltigen Medien optimiert.

Gemäß einem vorteilhaften Ausführungsbeispiel ist vorgesehen, dass der Ventilschließkörper mit C2.1 beschichtet ist. Durch die C-Schicht dem relativ weichen Material des Ventilsitzes angepasst und somit besonders verschleißarm ausgebildet. Einem Verschleiß des Ventilschließkörpers an dem Ventilsitz wird somit vorteilhaft vorgebeugt und somit dauerhafte Dichtheit des Einspritzventils sichergestellt.

Gemäß einem vorteilhaften Ausführungsbeispiel ist vorgesehen, dass der Ventilschließkörper kolsterisiert ist, wobei eine Randschicht des Ventilschließkörpers durch Diffundieren von Kohlenstoff gehärtet ist. Somit wird sichergestellt, dass die C-Schicht sicher auf dem Ventilschließkörper haftet. Gemäß einem vorteilhaften Ausführungsbeispiel ist vorgesehen, dass der Magnetanker mittels einer zweiten Schweißnaht an der Nadelhülse verschweißt ist. So kann der Magnetanker einfach und sicher an der Nadelhülse befestigt sein und stoffschlüssig mit dieser verbunden werden.

Gemäß einem vorteilhaften Ausführungsbeispiel ist vorgesehen, dass der Magnetanker aus dem Material X3CrNb17 (1.4511) ausgebildet ist. An den Schweißnähten kommt es bei herkömmlichen Materialien in Einspritzventilen, wie beispielsweise X3CrS13 für den Magnetanker, durch den Schweißprozess zu einer Verarmung der Chromanteile im Bereich der Wärmeeinflusszone. Somit kommt es zum korrosiven Angriff in Form von interkristalliner und Lochkorrosion im Bereich der Schweißnähte. Durch den, im Vergleich zu herkömmlichen Einspritzventilen, erhöhten Chromanteil im Magnetanker aus dem Material X3CrNb17 (1.4511) bleibt das Ventilglied auch im Bereich der zweiten Schweißnaht korrosionsbeständig und ist im Vergleich zu herkömmlichen Einspritzventilen ausreichend vor korrosiven Angriffen geschützt. Das Einspritzventil kann somit problemlos zum Einspritzen von Wasser oder wasserhaltigen Medien benutzt werden.

Weiterhin erfindungsgemäß wird die Verwendung des Einspritzventils zur Einspritzung von Wasser in ein Saugrohr einer Brennkraftmaschine vorgeschlagen. Das erfindungsgemäße Einspritzventil eignet sich besonders für die Einspritzung von Wasser. Des Weiteren kann das Einspritzventil zur Einspritzung von Harnstoff-Wasser-Lösungen (AdBlue) zur Abgasnachbehandlung von Diesel Brennkraftmaschinen verwendet werden.

### Kurze Beschreibung der Zeichnungen

Ein Ausführungsbeispiel der Erfindung ist in der Zeichnung vereinfacht dargestellt und in der nachfolgenden Beschreibung näher erläutert. Es zeigen
- Figur 1: ein teilweise dargestelltes Ausführungsbeispiel eines Einspritzventils und
- Figur 2: ein Ausführungsbeispiel eines Ventilgliedes für ein Einspritzventil.

### Ausführungsformen der Erfindung

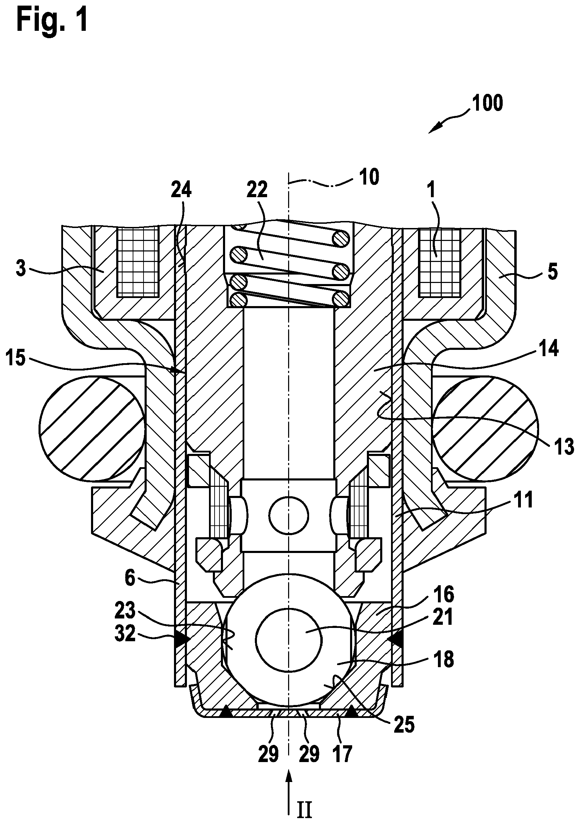

Das in der Figur 1 nur teilweise dargestellte elektromagnetisch betätigbare Ventil 100 in der Form eines Einspritzventils für Brennstoffeinspritzanlagen von gemischverdichtenden, fremdgezündeten Brennkraftmaschinen besitzt als Aktor einen elektromagnetischen Kreis mit einer Magnetspule 1 und einem nicht dargestellten Kern. Ein Spulenkörper 3 nimmt eine Bewicklung der Magnetspule 1 auf. Die Magnetspule 1 ist mit ihrem Spulenkörper 3 beispielsweise in einem als Außenpol dienenden topfförmigen Magnetgehäuse 5 eingebettet.

Die Magnetspule 1 selbst umgibt wiederum eine lang gestreckte, nicht magnetische Ventilhülse 6, die sich konzentrisch zu einer Ventillängsachse 10 erstreckt. Die rohrförmige Ventilhülse 6 weist einerseits einen Hülsenabschnitt 11 auf.

Die Ventilhülse 6 ist also über ihre gesamte axiale Länge rohrförmig ausgebildet. Dabei bildet die Ventilhülse 6 über ihre gesamte axiale Ausdehnung eine Durchgangsöffnung 13 mit weitgehend konstantem Durchmesser. Mit ihrem Hülsenabschnitt 11 umgibt die Ventilhülse 6 neben dem Kern auch einen Magnetanker 14. Weiter stromabwärts umgibt die Ventilhülse 6 einen Ventilsitzkörper 16. Eine mit dem Ventilsitzkörper 16 beispielsweise fest verbundene Spritzlochscheibe 17 wird von der Ventilhülse 6 in Umfangsrichtung vom Hülsenabschnitt 11 umschlossen. Die Ventilhülse 6 ist somit nicht nur ein Verbindungsteil, sondern sie erfüllt auch Halte-, Träger- bzw. Aufnahmefunktionen, insbesondere für den Ventilsitzkörper 16.

Der Ventilsitzkörper 16, insbesondere der an dem Ventilsitzkörper (16) vorgesehene Ventilsitz 25, kann beispielsweise aus dem Material mit der DIN-Kurzbezeichnung X4CrNiMo16-5-1 (Werkstoffnummer: 1.4418) ausgebildet sein.

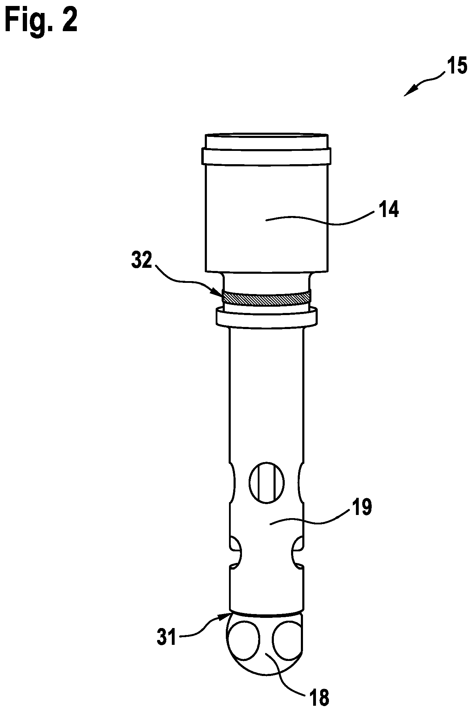

Das Ventilglied 15, das in der Durchgangsöffnung 13 angeordnet ist, kann beispielsweise wie in Fig. 2 gezeigt ausgebildet sein. Das Ventilglied 15 umfasst eine Nadelhülse 19, den Magnetanker 14 und den Ventilschließkörper 18. An der rohrförmigen ausgebildeten Nadelhülse 19 ist dabei an ihrem stromabwärtigen, der Spritzlochscheibe 17 zugewandten Ende ein kugelförmiger Ventilschließkörper 18 angeordnet. An dem stromaufwärtigen Ende der Nadelhülse 19 ist der Magnetanker 14 angeordnet. In diesem Ausführungsbeispiel ist der Ventilschließkörper 18 mittels einer ersten Schweißnaht 31 stoffschlüssig mit der Nadelhülse 19 verbunden und die Nadelhülse 19 ist mittels einer zweiten Schweißnaht 32 stoffschlüssig mit dem Magnetanker 14 verbunden.

Der Ventilschließkörper 18 ist beispielsweise aus dem Material mit der DIN-Kurzbezeichnung X5CrNiMo17-12-2 (Werkstoffnummer: 1.4401) ausgebildet. Der Ventilschließkörper 18 kann aber auch beispielsweise aus dem Material 1.4125 ausgebildet sein. Der Magnetanker 14 ist beispielsweise aus dem Material mit der DIN-Kurzbezeichnung X3CrNb17 (Werkstoffnummer: 1.4511) ausgebildet. Der Magnetanker 14 kann aber auch beispielsweise aus dem Material CC13FM oder aus dem Material 1.4005iA oder aus anderen geeigenten Materialien ausgebildet sein.

Die Betätigung des Einspritzventils erfolgt in bekannter Weise z. B. elektromagnetisch. Zur axialen Bewegung des Ventilgliedes 15 und damit zum Öffnen entgegen der Federkraft einer Rückstellfeder 22 bzw. Schließen des Einspritzventils dient der elektromagnetische Kreis. Der Magnetanker 14 ist mit dem Ventilschließkörper 18 abgewandten Ende auf den Kern ausgerichtet. Zur Führung des Ventilschließkörpers 18 während der Axialbewegung des Ventilgliedes 15 dient eine Führungsöffnung 23 des Ventilsitzkörpers 16. Außerdem wird der Magnetanker 14 während der Axialbewegung in der Ventilhülse 6 im Bereich von Führungsabschnitten 24 geführt.

Der kugelförmige Ventilschließkörper 18 wirkt mit einer sich in Strömungsrichtung kegelstumpfförmig verjüngenden Ventilsitzfläche 25 des Ventilsitzkörpers 16 zusammen, die in axialer Richtung stromabwärts der Führungsöffnung 23 ausgebildet ist. An seiner dem Ventilschließkörper 18 abgewandten Stirnseite ist der Ventilsitzkörper 16 mit der beispielsweise schalenförmig ausgebildeten Spritzlochscheibe 17 konzentrisch und fest, beispielsweise durch eine Schweißnaht verbunden.

Die dünnwandige Ventilhülse 6 ist beispielsweise durch Tiefziehen ausgebildet worden, wobei als Werkstoff beispielsweise ein nicht magnetisches Material, z. B. ein rostbeständiger CrNi-Stahl verwendet ist.

Selbstverständlich sind auch weitere Ausführungsbeispiele und Mischformen der dargestellten Ausführungsbeispiele möglich.

## Patentansprüche

1. Einspritzventil für Einspritzanlagen von Brennkraftmaschinen, insbesondere für Wassereinspritzanlagen von Brennkraftmaschinen, mit einer Ventillängsachse (10), mit einem Ventilschließkörper (18), der Teil eines axial entlang der Ventillängsachse (10) bewegbaren Ventilgliedes (15) ist und der mit einem an einem Ventilsitzkörper (16) vorgesehenen Ventilsitz (25) zusammenwirkt, mit einer dünnwandigen, sich axial erstreckenden Ventilhülse (6), in der sich das Ventilglied (15) axial bewegt, **dadurch gekennzeichnet, dass** der Ventilsitz (25) aus dem Material X4CrNiMo16-5-1 (1.4418) ausgebildet ist.

2. Einspritzventil nach einem der vorhergehenden Anspruch 1, **dadurch gekennzeichnet, dass** das Ventilglied (15) den Ventilschließkörper (18), eine Nadelhülse (19) und einen Magnetanker (14) umfasst, wobei der Ventilschließkörper (18) an einem stromabwärtigen, dem Ventilsitzkörper (16) zugewandten Ende der Nadelhülse (19) angeordnet ist und der Magnetanker an dem stromaufwärtigen Ende der Nadelhülse (19) angeordnet ist.

3. Einspritzventil nach Anspruch 2, **dadurch gekennzeichnet, dass** der Ventilschließkörper (18) mittels einer ersten Schweißnaht (31) an die Nadelhülse (19) geschweißt ist.

4. Einspritzventil nach einem der Ansprüche 2 oder 3, **dadurch gekennzeichnet, dass** der Ventilschließkörper (18) aus dem Material X5CrNiMo17-12-2 (1.4401) ausgebildet ist.

5. Einspritzventil nach einem der Ansprüche 2 bis 4, **dadurch gekennzeichnet, dass** der Ventilschließkörper (18) mit C2.1 beschichtet ist.

6. Einspritzventil nach einem der Ansprüche 2 bis 5, **dadurch gekennzeichnet, dass** der Ventilschließkörper (18) kolsterisiert ist, wobei eine Randschicht des Ventilschließkörpers (18) durch Diffundieren von Kohlenstoff gehärtet ist.

7. Einspritzventil nach einem der Ansprüche 2 bis 6, **dadurch gekennzeichnet, dass** der Magnetanker (14) mittels einer zweiten Schweißnaht (32) an der Nadelhülse (19) verschweißt ist.

8. Einspritzventil nach einem der Ansprüche 2 bis 7, **dadurch gekennzeichnet, dass** der Magnetanker (14) aus dem Material X3CrNb17 (1.4511) ausgebildet ist.

9. Verwendung des Einspritzventils nach einem der vorhergehenden Ansprüche zur Einspritzung von Wasser in ein Saugrohr einer Brennkraftmaschine.

10. Wassereinspritzvorrichtung umfassend ein Einspritzventil nach einem der Ansprüche 1 bis 9 zum Einspritzen von Wasser in eine Brennkraftmaschine oder zum Einspritzen einer Harnstoff-WasserLösung bei der Abgasnachbehandlung.
